# EUROPEAN PATENT APPLICATION

(11) **EP 3 118 695 A1**
(43) Date of publication of application: **18.01.2017**
(21) Application number: 16167710.9
(22) Date of filing: 29.04.2016
(51) Int. Cl.: G05B 9/03

(54) **MULTIPLEX CONTROL APPARATUS**

(30) Priority: 13.07.2015 JP 2015139426
(71) Applicant: Kabushiki Kaisha Toshiba, Minato-ku Tokyo 105-8001 (JP)
(72) Inventor: Mori, Toshiki, Tokyo, 105-8001 (JP); Nakatani, Hiroshi, Tokyo, 105-8001 (JP); Maruchi, Shunya, Tokyo, 105-8001 (JP); Yoshida, Yukitaka, Tokyo, 105-8001 (JP)
(74) Representative: Awapatent AB

(57) **Abstract**

In one embodiment, a multiplex control apparatus includes first to Nth input modules to convert input signals to input values, where N is an integer of three or more, and first to Nth operation modules to operate the input values to generate output values. The apparatus further includes first to Nth output modules to convert the output values to output signals outputted to a majority decision module, and first to Nth power supply modules to supply power to the first to Nth input, operation and output modules, respectively. An Xth output module is configured so that an output signal line between the Xth output module and the majority decision module is placed in an open state that is a safe-side status, if power supply from an Xth power supply module to the Xth output module is at a stop, where X is an integer from 1 to N.

## Description

### FIELD

Embodiments described herein relate to a multiplex control apparatus.

### BACKGROUND

In general, a control apparatus for controlling a power plant or the like needs to continue control without making any output errors even if a single failure occurs in the control apparatus. Accordingly, a multiplexing architecture equal to a triplexing architecture or higher is often used in such a control apparatus so that the control apparatus can continue control without making any output errors even in case of the single failure. Such a control apparatus is referred to as a multiplex control apparatus.

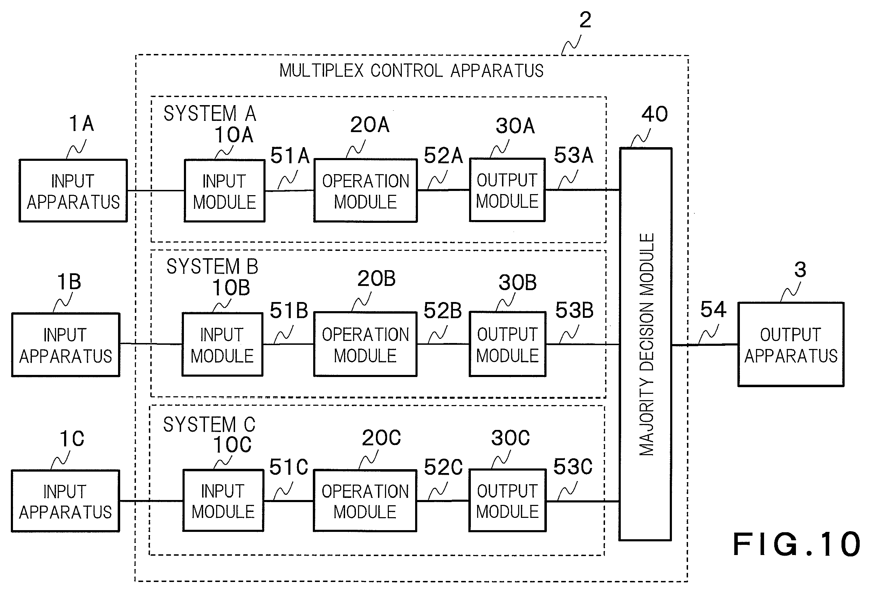

FIG. 10 is a block diagram illustrating a configuration of a conventional multiplex control apparatus 2.

The multiplex control apparatus 2 of FIG. 10 is a triplex control apparatus and connected to input apparatuses 1A to 1C and an output apparatus 3. This multiplex control apparatus 2 is provided with input modules 10A to 10C, operation modules 20A to 20C, output modules 30A to 30C and a majority decision module 40. This multiplex control apparatus 2 is provided with three systems, i.e., a system A including the input module 10A, the operation module 20A and the output module 30A, a system B including the input module 10B, the operation module 20B and the output module 30B, and a system C including the input module 10C, the operation module 20C and the output module 30C.

The input modules 10A to 10C respectively receive input signals from the input apparatuses 1A to 1C, convert the received input signals to input values, and output the input values to input value lines 51A to 51C. The operation modules 20A to 20C respectively receive the input values from the input value lines 51A to 51C, operate (calculate) the received input values to generate output values, and output the output values to output value lines 52A to 52C. The output modules 30A to 30C respectively receive the output values from the output value lines 52A to 52C, convert the received output values to output signals, and output the output signals to output signal lines 53A to 53C.

The majority decision module 40 receives the output signals from the output signal lines 53A to 53C, performs a majority operation to make a majority decision on the received output signals, and outputs an output signal selected by majority decision as a system output signal. The system output signal is output to the output apparatus 3 through a system output signal line 54. The majority decision module 40 performs a "2 out of 3" majority operation in which a system output signal that matches two or more output signals is selected out of three output signals. The operation of the output apparatus 3 is controlled by this system output signal.

Consequently, the multiplex control apparatus 2 can continue control with correct output even if a malfunction occurs in one of the input modules 10A to 10C, the operation modules 20A to 20C and the output modules 30A to 30C. The reason for this is that although one of the output modules 30A to 30C fails to provide a correct output due to this malfunction, other two output modules can provide correct outputs, and therefore, the multiplex control apparatus 2 can provide a correct output by majority decision.

Examples of the output apparatus 3 include a motor or a valve in a power plant. Examples of the output value include a value representing digital output conditions for operating the motor or the valve. Examples of the output signal and the system output signal include signals given by binarizing such output values. In this case, the output signal lines 53A to 53C and the system output signal line 54 can take two statuses, i.e., a safe-side status and a danger-side status.

The safe-side status refers to, for example, the open state of these signal lines in which the signal lines are open. On the other hand, the danger-side status refers to, for example, the closed state of these signal lines in which the signal lines are closed. Examples of the system output signal in this case include a control signal used to supply electrical power to motors for driving the power plant in a case where the system output signal line 54 is in a closed state. The reason for this is that such motors are generally safer when electrical power to the motors is cut off and the motors are in a halting state than when electrical power is supplied to the motors and the motors are in an operating state.

On the other hand, it is conceivable that the closed state of signal lines is a safe-side status. Examples of the system output signal in this case include a control signal used to supply electrical power to solenoid valves in the power plant in a case where the system output signal line 54 is in a closed state. The reason for this is that such solenoid valves are generally safer when electrical power is supplied to the solenoid valves and the solenoid valves are in an enabled state than when electrical power to the solenoid valves is cut off and the solenoid valves are in a disabled state.

### BRIEF DESCRIPTION OF THE DRAWINGS

FIG. 1 is a block diagram illustrating a configuration of a multiplex control apparatus of a first embodiment;
FIG. 2 is a block diagram illustrating in detail the configuration of the multiplex control apparatus of the first embodiment;
FIG. 3 is a flowchart illustrating an example of operation of the multiplex control apparatus of the first embodiment;
FIG. 4 is a flowchart illustrating another example of operation of the multiplex control apparatus of the first embodiment;
FIG. 5 is a block diagram illustrating an example of operation of a multiplex control apparatus of a second embodiment;
FIG. 6 is a block diagram illustrating another example of operation of the multiplex control apparatus of the second embodiment;
FIG. 7 is a block diagram illustrating an example of operation of a multiplex control apparatus of a third embodiment;
FIG. 8 is a block diagram illustrating an example of operation of a multiplex control apparatus of a fourth embodiment;
FIG. 9 is a block diagram illustrating another example of operation of the multiplex control apparatus of the fourth embodiment; and
FIG. 10 is a block diagram illustrating a configuration of a conventional multiplex control apparatus.

### DETAILED DESCRIPTION

Embodiments will now be explained with reference to the accompanying drawings.

As described above, the multiplex control apparatus 2 needs to continue control without making any output errors even in case of the single failure. Even if a first failure occurs, the multiplex control apparatus 2 is required to continue control with the failed state maintained. If an unexpected second failure occurs in this case, an abnormality may occur in the output of the multiplex control apparatus 2.

For example, if the first failure occurs in the output module 30A, the output signal of the output module 30A may be fixed to a danger side. If the second failure occurs in the output module 30B in this case and the output signal of the output module 30B is fixed to a danger side, the danger-side output signals of the output modules 30A and 30B become the majority in the majority decision module 40. As a result, the majority decision module 40 can only output a danger-side system output signal due to this double failure.

Accordingly, if the single failure occurs, necessary measures need to be taken in the conventional triplex control apparatus 2 before the double failure occurs. Therefore, there is a problem that the multiplex control apparatus 2 cannot continue control in case of the single failure.

In one embodiment, a multiplex control apparatus includes first to Nth input modules configured to convert input signals to input values and configured to output the input values, where N is an integer of three or more, and first to Nth operation modules configured to operate the input values to generate output values and configured to output the output values. The apparatus further includes first to Nth output modules configured to convert the output values to output signals and configured to output the output signals to a majority decision module that performs a majority operation on the output signals, and first to Nth power supply modules configured to supply electrical power to the first to Nth input modules, the first to Nth operation modules and the first to Nth output modules, respectively. Furthermore, an Xth output module is configured so that an output signal line between the Xth output module and the majority decision module is placed in an open state that is a safe-side status, if electrical power supply from an Xth power supply module to the Xth output module is at a stop, where X is an integer from 1 to N.

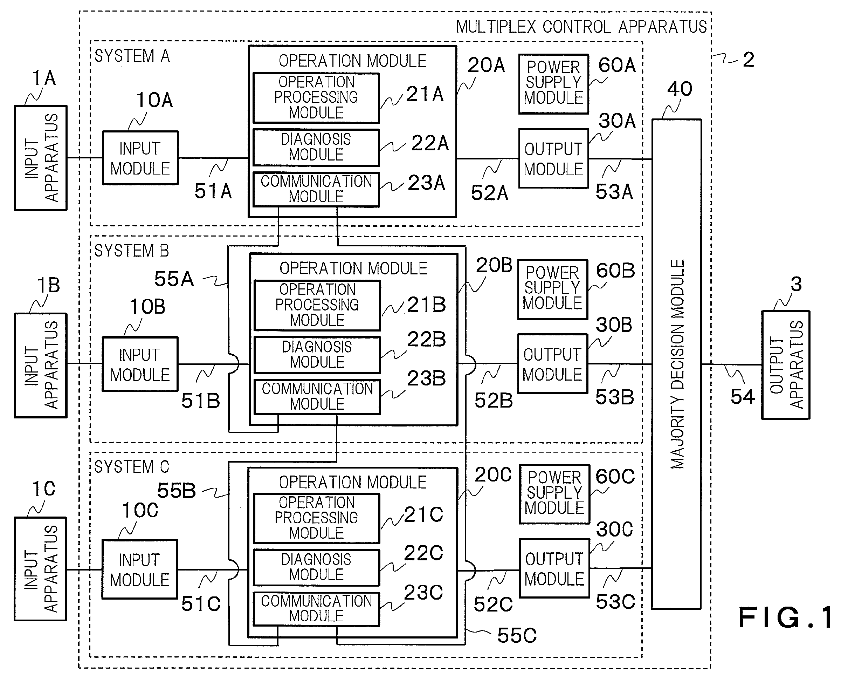

In FIGS. 1 to 9, components same as or similar to the components shown in FIG. 10 are denoted by the same reference numerals or characters as FIG. 10 and any descriptions overlapping with the description of FIG. 10 will be omitted.

### (First Embodiment)

FIG. 1 is a block diagram illustrating a configuration of a multiplex control apparatus 2 of a first embodiment.

The multiplex control apparatus 2 of FIG. 1 is provided with input modules 10A to 10C as examples of first to Nth input modules (N is an integer of three or more), operation modules 20A to 20C as examples of first to Nth operation modules, output modules 30A to 30C as examples of first to Nth output modules, a majority decision module 40, and power supply modules 60A to 60C as examples of first to Nth power supply modules. In addition, the operation modules 20A to 20C are respectively provided with operation processing modules 21A to 21C, diagnosis modules 22A to 22C and communication modules 23A to 23C.

The input module 10A converts an input signal received from the input apparatus 1A to an input value and outputs this input value to an input value line 51A. The operation module 20A operates the input value received from the input value line 51A to generate an output value, and outputs this output value to an output value line 52A. The output module 30A converts the output value received from the output value line 52A to an output signal and outputs this output signal to an output signal line 53A. The power supply module 60A supplies electrical power to the input module 10A, the operation module 20A and the output module 30A.

Likewise, the input module 10B converts an input signal received from the input apparatus 1B to an input value and outputs this input value to an input value line 51B. The operation module 20B operates the input value received from the input value line 51B to generate an output value, and outputs this output value to an output value line 52B. The output module 30B converts the output value received from the output value line 52B to an output signal and outputs this output signal to an output signal line 53B. The power supply module 60B supplies electrical power to the input module 10B, the operation module 20B and the output module 30B.

Likewise, the input module 10C converts an input signal received from the input apparatus 1C to an input value and outputs this input value to an input value line 51C. The operation module 20C operates the input value received from the input value line 51C to generate an output value, and outputs this output value to an output value line 52C. The output module 30C converts the output value received from the output value line 52C to an output signal and outputs this output signal to an output signal line 53C. The power supply module 60C supplies electrical power to the input module 10C, the operation module 20C and the output module 30C.

The operation processing module 21A operates an input value from the input module 10A to generate an output value, and outputs the output value to the output value line 52A. This is also true for the operation processing modules 21B and 21C.

The communication modules 23A and 23B are connected to each other by a network 55A. The communication modules 23B and 23C are connected to each other by a network 55B. The communication modules 23C and 23A are connected to each other by a network 55C.

The communication module 23A supplies an input value from the input module 10A and an output value generated by the operation processing module 21A to the communication modules 23B and 23C through the networks 55A and 55C. The communication module 23A receives an input value from the input module 10B and an output value generated by the operation processing module 21B from the communication module 23B through the network 55A. The communication module 23A receives an input value from the input module 10C and an output value generated by the operation processing module 21C from the communication module 23C through the network 55C. This is also true for the communication modules 23B and 23C.

The diagnosis module 22A performs diagnostic processing, such as self-diagnosis, using an input value received from the input module 11A, an output value generated by the operation processing module 21A, and input values or output values received from the communication modules 23B and 23C. This is also true for the diagnosis modules 22B and 22C. The diagnosis modules 22A to 22C may exchange diagnosis results with one another through the networks 55A to 55C.

The majority decision module 40 receives output signals from the output signal lines 53A to 53C to perform a majority operation for making a majority decision on the received output signals, and outputs an output signal selected by majority decision as a system output signal. The system output signal is output to the output apparatus 3 through the system output signal line 54. The majority decision module 40 performs a "2 out of 3" majority operation in which a system output signal that matches two or more output signals is selected out of three output signals. The operation of the output apparatus 3 is controlled by this system output signal.

Examples of the input signals include signals representing details on the operation of switches and buttons, signals representing temperature and pressure measured with temperature and pressure sensors, and signals representing the speed and the number of revolutions of equipment. The input apparatuses 1A to 1C of the present embodiment supply the same input signal to the input modules 10A to 10C. The input signal may be a digital signal, an analog signal, or a pulse signal.

If the input signal is a digital signal, the input modules 10A to 10C submit the input signal to, for example, a digital filtering process to convert the input signal to an input value. If the input signal is an analog signal, the input modules 10A to 10C submit the input signal to, for example, analog-to-digital (A/D) conversion to convert the input signal to an input value. If the input signal is a pulse signal, the input modules 10A to 10C, for example, count the number of pulses to convert the input signal to an input value.

On the other hand, examples of the output apparatus 3 include motors, valves and light-emitting diode (LED) display devices in a power plant. Examples of the output values include values representing digital output conditions set to operate the motors, the valves and the LED display devices. Analog output conditions may be applied in place of digital output conditions. Examples of the output signals and the system output signal include signals given by binarizing such output values. In this case, the output signal lines 53A to 53C and the system output signal line 54 can take two statuses, i.e., a safe-side status and a danger-side status.

A safe-side status in the present embodiment refers to an open state of these signal lines in which the signal lines are open. On the other hand, a danger-side status in the present embodiment refers to the closed state of these signal lines in which the signal lines are closed. Examples of the system output signal in the present embodiment include a control signal used to supply electrical power to motors for driving the power plant in a case where the system output signal line 54 is in a closed state. Accordingly, electrical power is supplied to motors in the case of a closed state in which the system output signal line 54 is in a danger-side status, whereas electrical power to the motors is cut off in the case of an open state in which the system output signal line 54 is in a safe-side status.

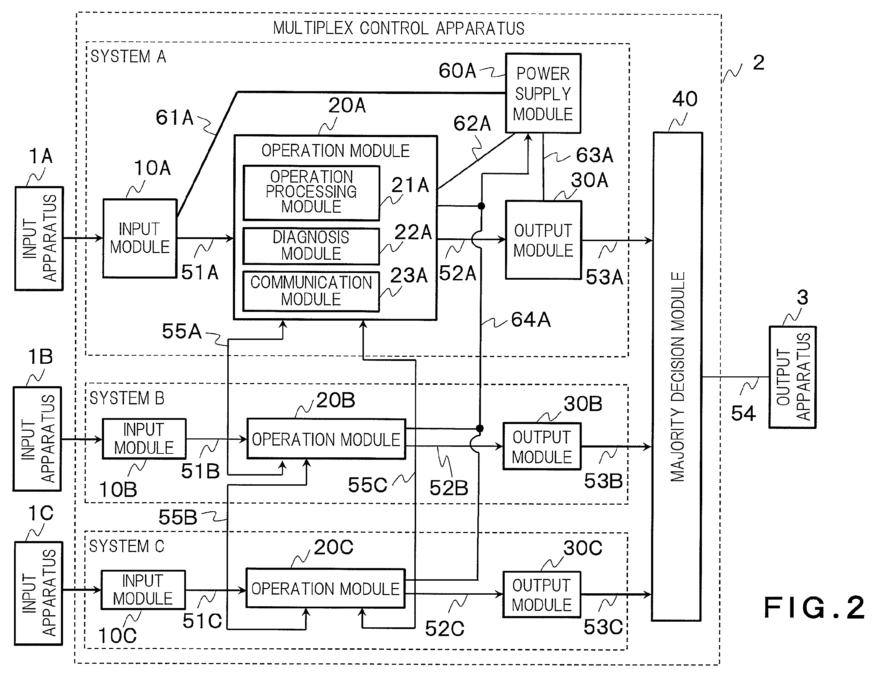

FIG. 2 is a block diagram illustrating in detail the configuration of the multiplex control apparatus 2 of the first embodiment.

The power supply modules 60A to 60C supply electrical power to the modules of the systems A to C, respectively. For example, the power supply module 60A supplies electrical power to the input module 10A through a power supply line 61A, supplies electrical power to the operation module 20A through a power supply line 62A, and supplies electrical power to the output module 30A through a power supply line 63A. In addition, the operation modules 20A to 20C are connected to the power supply module 60A by a signal line 64A and can control the on/off state of electrical power supply by the power supply module 60A through the signal line 64A. This is also true for the power supply modules 60B and 60C. Accordingly, the operation modules 20A to 20C can also control the on/off state of electrical power supply by the power supply module 60B and the on/off state of electrical power supply by the power supply module 60C through unillustrated signal lines.

The output module 30A of the present embodiment is configured so that the output signal line 53A is placed in an open state which is a safe-side status, in a case where electrical power supply from the power supply module 60A to the output module 30A is at a stop. Accordingly, if any abnormality, such as a malfunction, occurs in the output module 30A, the operation modules 20A to 20C stop electrical power supply from the power supply module 60A to the output module 30A. Consequently, the output signal of the output module 30A can be fixed to the safe side (open output) rather than the danger side (closed output). This is also true for the output modules 30B and 30C.

According to the present embodiment, it is therefore possible to avoid the situation in which the majority decision module 40 can only output a danger-side system output signal in a case where a double failure occurs in the output modules 30A to 30C. According to the present embodiment, it is therefore possible to improve the safety of the multiplex control apparatus 2 against a double failure.

Hereinafter, a description will be made of the operation of the multiplex control apparatus 2 in a case where a malfunction occurs in the output module 30A. The output module 30A is an example of an Xth output module, where X is an integer from 1 to N. The description to be made hereinafter also holds true for the output modules 30B and 30C.

The operation modules 20A to 20C of the present embodiment monitor the presence and absence of a malfunction in the output module 30A, and stop electrical power supply from the power supply module 60A to the output module 30A if the malfunction of the output module 30A is detected. As a result, the output signal line 53A is placed in an open state. The operation modules 20A to 20C are examples of a monitoring module and a stopping module.

The output module 30A may be monitored by the three operation modules 20A to 20C, or may be monitored by one or two of the operation modules 20A to 20C. Hereinafter, a description will be made of various examples of the latter case.

In a first example, the operation module 20A monitors the presence and absence of a malfunction in the output module 30A. If the malfunction of the output module 30A is detected by the operation module 20A, the operation module 20A stops electrical power supply from the power supply module 60A to the output module 30A. The operation module 20A in this case is an example of the monitoring module, the stopping module and an Xth operation module.

In the present embodiment, the presence and absence of a malfunction in the output module 30A is constantly monitored by means of self-diagnosis performed by the diagnosis module 22A. In the first example, the operation module 20A can detect the malfunction of the output module 30A by means of this self-diagnosis.

In a second example, the operation module 20B monitors the presence and absence of a malfunction in the output module 30A. If the malfunction of the output module 30A is detected by the operation module 20B, the operation module 20B stops electrical power supply from the power supply module 60A to the output module 30A. The operation module 20B in this case is an example of the monitoring module, the stopping module and an Yth operation module, where Y is an integer from 1 to N and different from X.

In the present embodiment, the presence and absence of a malfunction in the output module 30A is constantly monitored by means of self-diagnosis performed by the diagnosis module 22A, as described above. The results of this diagnosis are transferred to the diagnosis modules 22B and 22C through the networks 55A and 55C. In the second example, the operation module 20B can detect the malfunction of the output module 30A according to this diagnosis result.

In the second example, the operation module 20B monitors the output module 30A, the operation module 20C monitors the output module 30B, and the operation module 20A monitors the output module 30C, thereby realizing a loop-like observational relationship. Alternatively, the operation module 20C may monitor the output module 30A, the operation module 20A may monitor the output module 30B, and the operation module 20B may monitor the output module 30C.

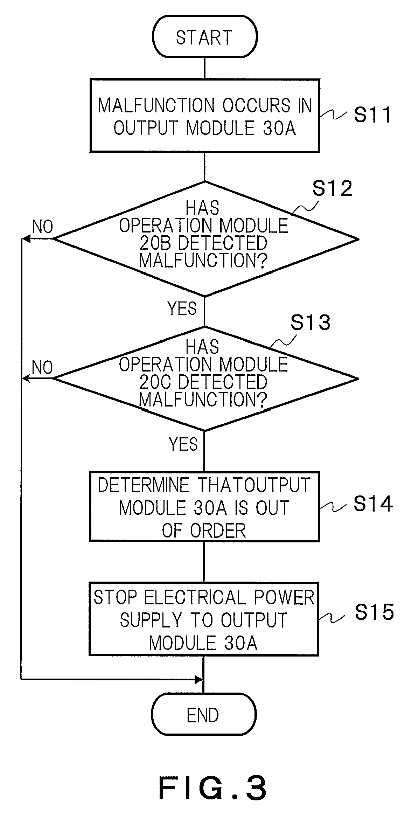

FIG. 3 is a flowchart illustrating an example of operation of the multiplex control apparatus 2 of the first embodiment.

In this example, the operation modules 20B and 20C monitor the presence and absence of a malfunction in the output module 30A. Accordingly, if a malfunction occurs in the output module 30A (step S11), each of the operation modules 20B and 20C detects the malfunction of the output module 30A (steps S12 and S13). Each of the operation modules 20B and 20C can detect the malfunction of the output module 30A using diagnosis results transferred from the diagnosis module 22A to the diagnosis modules 22B and 22C.

The multiplex control apparatus 2 determines that a malfunction is present in the output module 30A if both of the operation modules 20B and 20C detect the malfunction of the output module 30A (step S14). If the multiplex control apparatus 2 determines that a malfunction is present in the output module 30A, the multiplex control apparatus 2 stops electrical power supply from the power supply module 60A to the output module 30A (step S15). On the other hand, if only one of the operation modules 20B and 20C detects the malfunction of the output module 30A, electrical power supply from the power supply module 60A to the output module 30A is maintained.

Processes in steps S14 and S15 are carried out by, for example, the operation modules 20B and 20C. In this case, the operation modules 20B and 20C, for example, exchange results of fault diagnosis of the output module 30A with each other through the network 55B, and thereby, can determine whether or not both of the operation modules 20B and 20C have detected the malfunction of the output module 30A. A determination process in step S14 and a shutdown process in step S15 may be carried out by the operation module 20B alone or by the operation module 20C alone. In the example of FIG. 3, the operation modules 20B and 20C are examples of the monitoring module and the stopping module, and examples of Yth and Zth operation modules where Y and Z are integers from 1 to N and different from X. An example in which the processes in steps S14 and S15 are carried out by the operation module 20A will be described later.

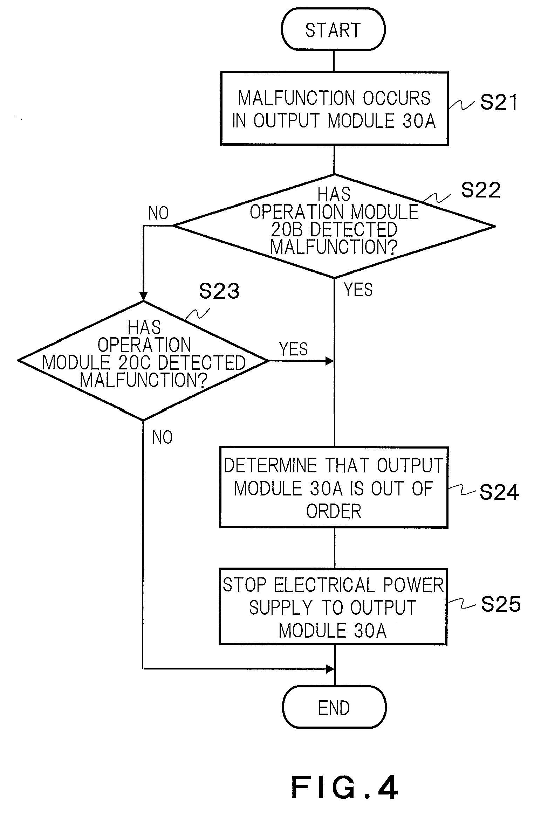

FIG. 4 is a flowchart illustrating another example of operation of the multiplex control apparatus 2 of the first embodiment.

In this example, the operation modules 20B and 20C monitor the presence and absence of a malfunction in the output module 30A. Accordingly, if a malfunction occurs in the output module 30A (step S21), each of the operation modules 20B and 20C detects the malfunction of the output module 30A (steps S22 and S23). Each of the operation modules 20B and 20C can detect the malfunction of the output module 30A using diagnosis results transferred from the diagnosis module 22A to the diagnosis modules 22B and 22C.

The multiplex control apparatus 2 determines that a malfunction is present in the output module 30A if at least one of the operation modules 20B and 20C detects the malfunction of the output module 30A (step S24). If the multiplex control apparatus 2 determines that a malfunction is present in the output module 30A, the multiplex control apparatus 2 stops electrical power supply from the power supply module 60A to the output module 30A (step S25). On the other hand, if neither the operation module 20B nor the operation module 20C detects the malfunction of the output module 30A, electrical power supply from the power supply module 60A to the output module 30A is maintained.

Processes in steps S24 and S25 are carried out by, for example, each of the operation modules 20B and 20C. For example, if the operation module 20B detects the malfunction of the output module 30A, the operation module 20B alone can carry out the processes in steps S24 and S25. Alternatively, if the operation module 20C detects the malfunction of the output module 30A, the operation module 20C alone can carry out the processes in steps S24 and S25. In the example of FIG. 4, the operation modules 20B and 20C are examples of the monitoring module and the stopping module, and examples of the Yth and Zth operation modules where Y and Z are integers from 1 to N and different from X. An example in which the processes in steps S24 and S25 are carried out by the operation module 20A will be described later.

As described above, the output module 30A of the present embodiment is configured so that the output signal line 53A is placed in an open state which is a safe-side status, in a case where electrical power supply from the power supply module 60A to the output module 30A is at a stop. This is also true for the output modules 30B and 30C of the present embodiment. According to the present embodiment, it is therefore possible to improve the safety of the multiplex control apparatus 2 against a double failure.

In addition, in the present embodiment, a malfunction in the output module 30A can be monitored in various ways and electrical power supply from the power supply module 60A to the output module 30A can be controlled in various ways, as in the first and second examples and the examples of FIGS. 3 and 4. For example, monitoring the output module 30A with one operation module has the advantage of being able to reduce the burden of a monitoring process. In addition, monitoring the output module 30A with two operation modules has the advantage of being able to improve the certainty of fault detection.

### (Second Embodiment)

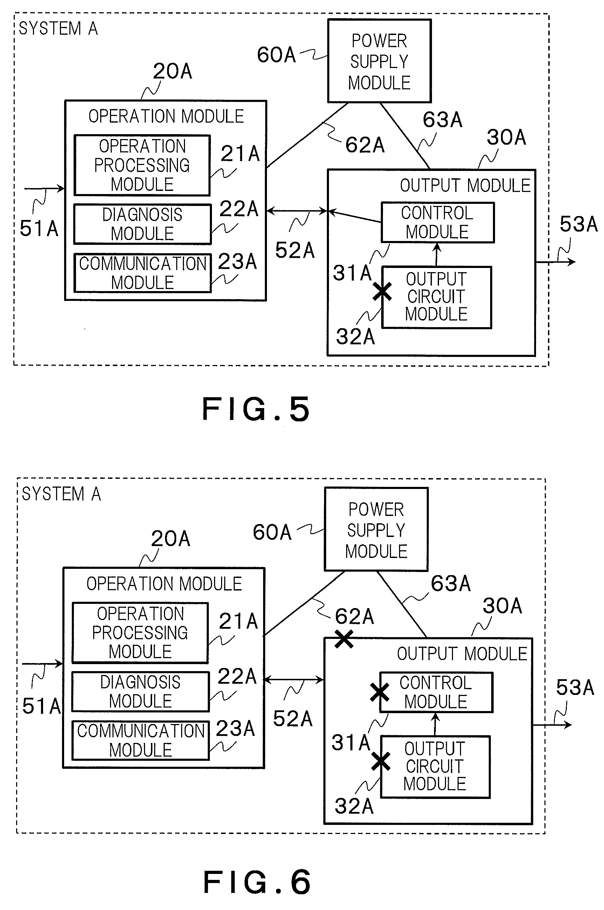

FIG. 5 is a block diagram illustrating an example of operation of a multiplex control apparatus 2 of a second embodiment. Although FIG. 5 illustrates the configuration of the system A only, the description to be made hereinafter also holds true for the systems B and C.

The output module 30A is provided with a control module 31A for controlling the operation of the output module 30A, and an output circuit module 32A for connecting the control module 31A and the output signal line 53A. Examples of the control module 31A include a micro processing unit (MPU). Examples of the output circuit 32A include an electrical circuit containing circuit elements and electrical wires. For example, the control module 31A receives an output value from the output value line 52A, converts the received output value to an output signal, and outputs this output signal to the output circuit module 32A. In addition, the output circuit module 32A receives an output signal from the control module 31A, and outputs this output signal to the output signal line 53A.

FIG. 5 shows that the output circuit module 32A is out of order. In the present embodiment, the control module 31A can detect a malfunction in the output circuit module 32A in a case where the output circuit module 32A is out of order and the control module 31A continues to operate. Accordingly, the control module 31A notifies the operation module 20A of information indicating that the output circuit module 32A has gone out of order, through the output value line 52A. This information enables the operation module 20A to detect the malfunction of the output module 30A (output circuit module 32A), and thereby, stops electrical power supply from the power supply module 60A to the output module 30A.

The information notified from the control module 31A enables the operation module 20A to acquire a larger amount of information on the malfunction of the output module 30A than available from the diagnosis results from the diagnosis module 22A. For example, according to the information notified from the control module 31A, the operation module 20A can acquire the information that the output circuit module 32A is out of order and the control module 31A continues to operate. According to the present embodiment, it is therefore possible to improve the convenience of fault detection results, compared with the first embodiment. For example, it is possible to perform more advanced control processing in the multiplex control apparatus 2 using such fault detection results.

The operation module 20A may transfer the information notified from the control module 31A to the operation modules 20B and 20C. In this case, the operation modules 20B and 20C may stop electrical power supply from the power supply module 60A to the output module 30A on the basis of this notified information.

FIG. 6 is a block diagram illustrating another example of operation of the multiplex control apparatus 2 of the second embodiment. Although FIG. 6 illustrates the configuration of the system A only, the description to be made hereinafter also holds true for the systems B and C.

FIG. 6 represents the malfunction of the output module 30A as a whole, including the malfunctions of the control module 31A and the output circuit module 32A. In this case, the control module 31A cannot notify the operation module 20A of the malfunction of the output module 30A. The operation module 20A therefore cannot recognize details on the malfunction of the output module 30A. From the diagnosis results received from the diagnosis module 22A, however, the operation module 20A can recognize that the output module 30A is in a failed state of some sort. That is, the operation module 20A can detect the malfunction of the output module 30A without resorting to information from the control module 31A of the output module 30A.

As described above, the operation modules 20A to 20C of the present embodiment can detect the malfunction of the output module 30A in a plurality of ways. According to the present embodiment, it is therefore possible to increase the accuracy of fault detection and cope with various patterns of failure.

### (Third Embodiment)

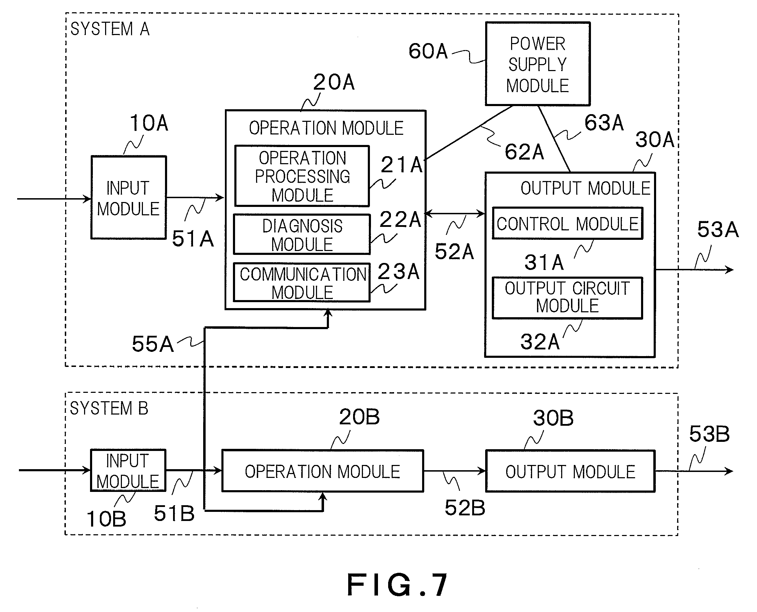

FIG. 7 is a block diagram illustrating an example of operation of a multiplex control apparatus 2 of a third embodiment.

In the first embodiment, the power supply module 60A is connected to the operation modules 20A to 20C through the signal line 64A (FIG. 2). Accordingly, each of the operation modules 20A to 20C can control the power supply module 60A using the signal line 64A. The operation modules 20B and 20C can therefore stop electrical power supply from the power supply module 60A to the output module 30A in the processes of FIGS. 3 and 4. The operation modules 20B and 20C in this case are examples of the stopping module.

On the other hand, the third embodiment provides a method of stopping electrical power supply that can be applied even in the absence of the signal line 64A, as illustrated in FIG. 7. If the operation module 20B of the present embodiment detects the malfunction of the output module 30A, the operation module 20B transfers information on the malfunction of the output module 30A to the operation module 20A through the network 55A. Likewise, if the operation module 20C of the present embodiment detects the malfunction of the output module 30A, the operation module 20C transfers information on the malfunction of the output module 30A to the operation module 20A through the network 55C.

Accordingly, the operation module 20A can carry out the processes of steps S14 and S15 in FIG. 3 in place of the operation modules 20B and 20C. That is, if the operation module 20A recognizes, from the transferred information, that both of the operation modules 20B and 20C have detected the malfunction of the output module 30A, the operation module 20A can stop electrical power supply from the power supply module 60A to the output module 30A. This operation module 20A is an example of the stopping module.

Likewise, the operation module 20A can carry out the processes of steps S24 and S25 in FIG. 4 in place of the operation modules 20B and 20C. That is, if the operation module 20A recognizes, from the transferred information, that at least one of the operation modules 20B and 20C has detected the malfunction of the output module 30A, the operation module 20A can stop electrical power supply from the power supply module 60A to the output module 30A. This operation module 20A is an example of the stopping module.

As described above, in the present embodiment, the operation modules 20B and 20C detect the malfunction of the output module 30A and the operation module 20A controls the power supply module 60A. According to the present embodiment, it is therefore possible to collect information regarding the output module 30A of the system A into the operation module 20A of the system A. According to the present embodiment, it is therefore possible for the operation module 20A, for example, to manage information on the malfunction of the output module 30A, the stoppage of electrical power supply from the power supply module 60A, and the like. Likewise, it is possible for the operation modules 20B and 20C to manage information on the malfunctions of the output module 30B and 30C, the stoppage of electrical power supply from the power supply modules 60B and 60C, and the like. Consequently, it is possible to perform various types of information processing on a system-by-system basis.

The processes in the present embodiment can be applied to not only the operation module 20A of the system A but also the operation module 20B of the system B and the operation module 20C of the system C. The processes in the present embodiment can also be applied to the second example of the first embodiment. That is, in the second example, the operation module 20B may detect the malfunction of the output module 30A and the operation module 20A may control the power supply module 60A.

### (Fourth Embodiment)

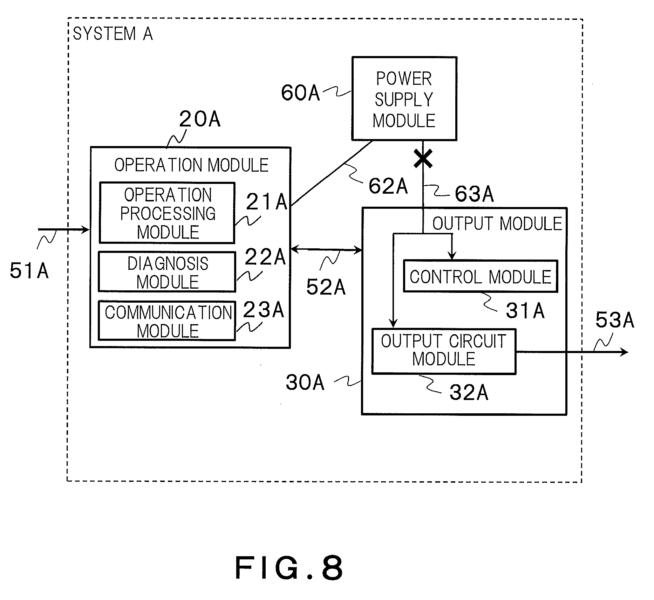

FIG. 8 is a block diagram illustrating an example of operation of a multiplex control apparatus 2 of a fourth embodiment. Although FIG. 8 illustrates the configuration of the system A only, the description to be made hereinafter also holds true for the systems B and C.

The output module 30A of the present embodiment is provided with a control module 31A and an output circuit module 32A, as in the second embodiment. The control module 31A and the output circuit module 32A are supplied with electrical power from the power supply module 60A through a common power supply line 63A.

Electrical power supply from the power supply module 60A to the output module 30A can be stopped by cutting off electrical power supply to the power supply line 63A, as illustrated in FIG. 8. Consequently, the output signal line 53A is placed in an open state. Such a method of stopping electrical power supply is effective if the output module 30A as a whole goes out of order (see FIG. 6). This method may be undesirable, however, if only the output circuit module 32A goes out of order (see FIG. 5). The reason for this is that the control module 31A not out of order is disabled, and therefore, cannot notify the operation module 20A of information indicating the malfunction of the output circuit module 32A.

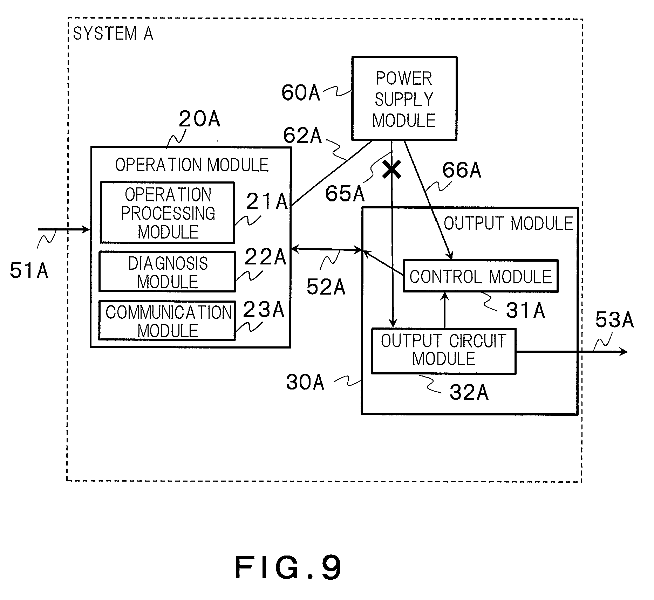

FIG. 9 is a block diagram illustrating another example of operation of the multiplex control apparatus 2 of the fourth embodiment. Although FIG. 9 illustrates the configuration of the system A only, the description to be made hereinafter also holds true for the systems B and C.

In FIG. 9, the power supply line 63A is replaced with power supply lines 65A and 66A. The power supply line 65A is used to supply electrical power from the power supply module 60A to the output circuit module 32A. The power supply line 66A is used to supply electrical power from the power supply module 60A to the control module 31A. The power supply line 65A and the power supply line 66A are wires independent of each other.

In FIG. 9, if the output circuit module 32A is out of order but the control module 31A is not out of order, the power supply module 60 stops electrical power supply to the power supply line 65A while maintaining electrical power supply to the power supply line 66A. Consequently, electrical power supply to the output circuit module 32A is stopped and the output circuit module 32A is disabled, and therefore, the output signal line 53A is placed in an open state. On the other hand, electrical power supply to the control module 31A is maintained and the control module 31A continues to operate. Accordingly, the control module 31A can notify the operation module 20A of information indicating the malfunction of the output circuit module 32A.

As described above, in the present embodiment, electrical power supply to the control module 31A and the output circuit module 32A can be stopped simultaneously or individually. A configuration in the former case has the advantage of, for example, being able to simplify the configuration of the power supply line 63 and the control of electrical power supply. A configuration in the latter case, on the other hand, has the advantage of, for example, being able to continue the operation of the control module 31A while placing the output signal line 53A in an open state.

The configuration of the multiplex control apparatus 2 of the present embodiment can be applied to not only the second embodiment but also the first and third embodiments.

In addition, the multiplex control apparatuses 2 of the first to fourth embodiments, which are provided with three systems of input modules, operation modules and output modules, may be provided with four or more systems of input modules, operation modules and output modules. If, for example, a multiplex control apparatus 2 is provided with N systems (N is an integer of three or more) of input modules, operation modules and output modules, then the majority decision module 40 performs a majority operation on output signals from the N systems of output modules.

While certain embodiments have been described, these embodiments have been presented by way of example only, and are not intended to limit the scope of the inventions. Indeed, the novel apparatuses described herein may be embodied in a variety of other forms; furthermore, various omissions, substitutions and changes in the form of the apparatuses described herein may be made without departing from the spirit of the inventions. The accompanying claims and their equivalents are intended to cover such forms or modifications as would fall within the scope and spirit of the inventions.

## Claims

1. A multiplex control apparatus comprising:
first to Nth input modules configured to convert input signals to input values and configured to output the input values, where N is an integer of three or more;
first to Nth operation modules configured to operate the input values to generate output values and configured to output the output values;
first to Nth output modules configured to convert the output values to output signals and configured to output the output signals to a majority decision module that performs a majority operation on the output signals; and
first to Nth power supply modules configured to supply electrical power to the first to Nth input modules, the first to Nth operation modules and the first to Nth output modules, respectively;
wherein an Xth output module is configured so that an output signal line between the Xth output module and the majority decision module is placed in an open state that is a safe-side status, if electrical power supply from an Xth power supply module to the Xth output module is at a stop, where X is an integer from 1 to N.

2. The apparatus of Claim 1, further comprising:
a monitoring module configured to monitor presence and absence of an abnormality in the Xth output module; and
a stopping module configured to stop the electrical power supply from the Xth power supply module to the Xth output module if the monitoring module detects the abnormality in the Xth output module;
wherein the Xth output module is configured so that the output signal line is placed in the open state if the stopping module stops the electrical power supply from the Xth power supply module to the Xth output module.

3. The apparatus of Claim 2, wherein the monitoring module and the stopping module for the Xth output module are an Xth operation module.

4. The apparatus of Claim 2, wherein the monitoring module and the stopping module for the Xth output module are a Yth operation module, where Y is an integer from 1 to N and different from X.

5. The apparatus of Claim 1, wherein
the Xth output module comprises a control module configured to convert an output value to an output signal, and an output circuit module configured to output the output signal to the majority decision module, and
the control module of the Xth output module detects an abnormality in the output circuit module of the Xth output module, and transfers information on the abnormality in the output circuit module to an Xth operation module.

6. The apparatus of Claim 1, wherein
the Xth output module comprises a control module configured to convert an output value to an output signal, and an output circuit module configured to output the output signal to the majority decision module, and
an Xth operation module can detect the abnormality in the Xth output module without information from the control module of the Xth output module.

7. The apparatus of Claim 1, wherein
the Xth output module comprises a control module configured to convert an output value to an output signal, and an output circuit module configured to output the output signal to the majority decision module, and
the Xth power supply module realizes the open state of the output signal line by stopping the electrical power supply to the control module and the output circuit module of the Xth output module.

8. The apparatus of Claim 1, wherein
the Xth output module comprises a control module configured to convert an output value to an output signal, and an output circuit module configured to output the output signal to the majority decision module, and
the Xth power supply module realizes the open state of the output signal line by stopping the electrical power supply to the output circuit module of the Xth output module while maintaining the electrical power supply to the control module of the Xth output module.
